# EUROPEAN PATENT SPECIFICATION

(11) **EP 3 799 244 B1**
(45) Date of publication and mention of the grant of the patent: **18.11.2026**
(21) Application number: 19819033.2
(22) Date of filing: 20.03.2019
(51) Int. Cl.: H02J 3/32, H02H 9/00, H02J 1/10, H02J 1/12, H02J 3/38, H02M 1/32, H02M 7/77

(54) **ENERGY STORAGE UNIT SEPARATED CONVERTER, APPLICATION SYSTEM THEREOF AND CONTROL METHOD THEREFOR**
ENERGIESPEICHEREINHEIT UND ANWENDUNGSSYSTEM DAFÜR UND STEUERVERFAHREN DAFÜR
CONVERTISSEUR SÉPARÉ D'UNITÉ DE STOCKAGE D'ÉNERGIE, SYSTÈME D'APPLICATION ASSOCIÉ ET PROCÉDÉ DE COMMANDE ASSOCIÉ

(30) Priority: 13.06.2018 CN 201810606795; 13.06.2018 CN 201810606509; 13.06.2018 CN 201810606793
(43) Date of publication of application: 31.03.2021
(73) Proprietor: NR Electric Co., Ltd., Nanjing, Jiangsu 211102 (CN); NR Engineering Co., Ltd., Nanjing, Jiangsu 211102 (CN)
(72) Inventor: XIE, Yeyuan, Nanjing, Jiangsu 211102 (CN); WANG, Yu, Nanjing, Jiangsu 211102 (CN); LIAN, Jianyang, Nanjing, Jiangsu 211102 (CN); DUAN, Jun, Nanjing, Jiangsu 211102 (CN); LIU, Hongde, Nanjing, Jiangsu 211102 (CN)
(74) Representative: Kurig, Thomas
(86) International application number: PCT/CN2019/078817
(87) International publication number: WO 2019/237785

(56) References cited:
- EP-A2- 2 374 651
- EP-A2- 2 698 641
- EP-B1- 2 374 651
- WO-A1-2012/058286
- WO-A2-2014/199203
- CN-A- 103 872 784
- CN-A- 107 910 930
- CN-A- 108 711 875
- CN-A- 108 767 841
- CN-A- 108 767 882
- JP-A- 2012 039 774
- SHEN Z JOHN ET AL: "Ultrafast autonomous solid state circuit breakers for shipboard DC power distribution", 2015 IEEE ELECTRIC SHIP TECHNOLOGIES SYMPOSIUM (ESTS), IEEE, 21 June 2015 (2015-06-21), pages 299 - 305, XP033175914, DOI: 10.1109/ESTS.2015.7157908
- SIMON KARL PETER: "DC Networks in Industrial Production", 1 September 2017 (2017-09-01), 60528 Frankfurt am Main, pages 1 - 12, XP055822715, Retrieved from the Internet <URL:https://dc-industrie.zvei.org/fileadmin/user_upload/Presse_und_Medien/Publikationen/2017/September/DC_Industrie_Gleichspannungsnetze_in_der_industriellen_Produktion/DC-Industrie_2017_englische_Version_final.pdf> [retrieved on 20210708]

## Description

### Technical Field

The invention relates to the technical field of power electronic converters, and particularly relates to an energy storage unit separated converter, and an application system thereof and a control method thereof.

### Background

With the continuous progress of distributed generation technology and the increasing maturity of power electronics technology in recent years, distributed generation are being applied to power grids more and more widely and has gradually become an effective supplement to large power grids. A distributed power supply, a load and an energy storage device constitute a DC micro grid.

On the one hand, because a large number of distributed power supplies are integrated into the power grid and the output of distributed power supplies fluctuates greatly, large-capacity energy storage units are needed to stabilize the fluctuation of power flow, so as to achieve the balance between supply and demand. However, the large-capacity energy storage units are too expensive and occupy too much space. The bottleneck of energy storage technology has seriously limited the development of distributed generation technology.

On the other hand, the distributed power supply is merged into the DC power grid through a power electronic conversion unit, which has a certain capacity of energy storage units for filtering out harmonics and stabilizing voltage during AC/DC conversion. In the prior art, these energy storage units are integrated with the power electronic conversion unit, and when the distributed power supply is out of operation, the whole system is out of operation, thus being unable to be fully utilized. A large number of distributed energy storage units need to be controlled in a coordinated manner, so that separated type energy storage units in the distributed energy storage units are connected to the DC power grid economically and reliably.

If centralized energy storage is connected to the grid through a large-capacity converter, the whole system cannot operate normally after the failure of the energy storage unit or the converter, and the reliability and flexibility are poor. In the traditional distributed energy storage mode, each energy storage unit runs independently, so it is impossible to share the energy storage units, and the overall utilization rate of the system is low. The energy storage system has a high cost and occupies a large space. Therefore, an economical, flexible and reliable energy storage system is urgently needed.

Document EP 2 698 641 A2 discloses an energy storage unit separated converter.

Document EP 2 374 651 A2 disclosed an electrical system of a vehicle comprising a storage section provided with at least one battery, a section of traction , a section of the auxiliaries, a first connecting switch connecting the storage section to the section of traction; a second connecting switch connecting the storage section to the section of the auxiliaries; and a control unit to supply a suitable electrical supply to the section of auxiliaries without using a dedicated electronic converter with an evident saving of costs and of dimensions and weight.Document EP 2 698 641 A2 disclosed an earth fault detection circuit for a high-voltage battery in a vehicle, including an A.C signal generation portion, a first capacitive element, a voltage dividing circuit, an earth fault detection portion; and/or a second capacitive element to judge the earth fault suitably in consideration of the influence of the noise which is generated from the inverter during the operation of the motor.

Document WO 2014/199203 A2 disclosed a power supply device for a vehicle comprising a power supply, an alternating current coupling unit, a direct current coupling unit, a communication unit, and an electronic control unit, which allows power feeding from a vehicle to an external device in an aspect of output appropriate for the external device to which power is fed.

Z. John Shen et al: "Ultrafast autonomous solid state circuit breakers for shipboard DC power distribution",2015 IEEE ELECTRIC SHIP TECHNOLOGIES SYMPOSIUM (ESTS), IEEE, 21 June 2015 (2015-06-21), pages 299-305, XP033175914,DOI: 10.1109/ESTS.2015.7157908 provided solid state circuit breakers for shipboard DC power distribution, comprising of a semiconductor static switch and its driver circuit, snubber or energy absorption elements, a current sensor, a signal processing circuit, a microcontroller or DSP, a data communication unit, and one or more auxiliary power supply, to isolate the fault current quickly enough before the converter source shuts itself down and creates a local blackout.

Document WO 2012/058286 A1 disclosed a battery system comprising a first battery unit, a DC voltage bus, a second battery unit electrically connected to the DC voltage bus, a current-limiting component; and switching circuitry for connecting the first battery unit to the DC voltage bus, where the switching circuitry is configured to electrically connect the first battery unit to the DC voltage bus either directly or through a current-limiting component, depending on an operating parameter of the first battery unit.

Karl Peter Simon: "DC Networks in Industrial Production",, 1 September 2017 (2017-09-01), pages 1-12, XP055822715,60528 Frankfurt am Main disclosed a power supply structure with central DC voltage power supply and drive controller, allowing the factory power supply to be stabilized and voltage fluctuations to be more easily compensated for.

### Summary

The invention refers to an energy storage unit separated converter according to claim 1. Preferred embodiments are defined in the dependent claims 2 to 15.

An embodiment of the present application provides an energy storage unit separated converter comprising a power electronic conversion unit, and at least one separated energy storage unit and a first switch set, wherein the first switch set is in series connection between the energy storage unit and a DC side of the power electronic conversion unit, and the energy storage unit and the power electronic conversion unit are separable from each other by separating a positive electrode switch and a negative electrode switch in the first switch set; and a DC switch and a current limiting resistor connected in parallel, wherein a combination of the DC switch and the current limiting resistor is connected in series between the separated energy storage unit and a DC power grid; and a second switch set connected in series between the separated energy storage unit and a DC power grid or an energy storage bus, wherein the separated energy storage unit and the energy storage bus is separable by separating a positive electrode switch and a negative electrode switch in the second switch set.

As an alternative scheme, the power electronic conversion unit comprises a DC-DC converter having one end connected to the first switch set and another end connected to a DC load or a DC power supply.

As an alternative scheme, the power electronic conversion unit comprises an AC-DC converter or a DC-AC converter, wherein a DC end of the AC-DC converter is connected to the first switch set, an AC end of the AC-DC converter is connected to an AC load or an AC power supply, a DC end of the DC-AC converter is connected to the first switch set, and an AC end of the DC-AC converter is used as an AC output end.

As an alternative scheme, the converter comprises a current detection unit for detecting a current flowing between the energy storage unit and a DC power grid.

As an alternative scheme, the converter comprises a current limiting inductor connected in series between the energy storage unit and the DC power grid.

As an alternative scheme, the DC switch comprises two power semiconductor switching devices provided with anti-parallel diodes and connected in reverse series.

Further, the converter comprises a distributed energy storage controller being configured to control one or more of the power electronic conversion unit, the first switch set, the second switch set and the DC switch.

Further, the distributed type energy storage controller comprises a communication module and a control module, wherein the communication module is used for receiving an external instruction, and the control module is used for controlling the power electronic conversion unit and the first switch set based on the external instruction; and the control module also controls the second switch set or/and the DC switch.

Further, the distributed energy storage controller is arranged close to the separated energy storage unit, and controls the separated energy storage unit in the condition that the power electronic conversion unit stops running.

An embodiment of the present application further provides a distributed energy storage system comprising: an energy storage bus and N energy storage unit separated converters described above wherein N ≥ 2, and the energy storage unit separated converters are connected in parallel to the energy storage bus; and N distributed energy storage controllers described above, each of which controls the respective energy storage unit separated converter one to one; and a master controller communicating with the N distributed energy storage controllers.

An embodiment of the present application further provides a distributed coordinated control system for energy storage units comprising: N energy storage unit separated converters described above wherein N ≥ 2; M distributed type energy storage controllers described above wherein M ≥ 2; and a main controller being configured to communicate with the distributed type energy storage controllers; and K converters without energy storage, each of which comprises a power electronic conversion unit, wherein K ≥ 1; wherein a number of the distributed energy storage controllers meets M ≤ (N+K).

Further, one-to-one communication or one-to-many communication is configured to be conducted between the distributed energy storage controllers and the energy storage unit separated converters or the converters without energy storage.

Further, each of the M distributed energy storage controllers is configured to control opening and closing of the first switch set and the second switch set in the energy storage unit separated converter established communication connection with the distributed energy storage controller.

Further, the coordinated control system comprises: a main converter being an AC-DC converter having an AC side connected to an AC power supply, and a DC side connected to a DC power grid.

Further, the distributed energy storage controller is configured to receive active and reactive power values sent from the main controller to control the power electronic conversion unit.

An embodiment of the present application further provides a control method of the energy storage unit separated converter described above comprising: stopping the power electronic conversion unit and opening the first switch set, when the power electronic conversion unit is needed to be separated from the separated energy storage unit; closing the second switch set or/and the DC switch to enter into an energy storage input state, when the control module receives an energy storage unit input instruction.

Further, in the case that the control module receives a grid connection instruction, the control method comprises: closing the first switch set; closing the second switch set or/and the DC switch; and starting the power electronic conversion unit to enter into a grid connection state.

Further, when the control module detects a failure of the power electronic conversion unit, the control method comprises: stopping the power electronic conversion unit; opening the first switch set; judging whether or not the failure is eliminated; if not, opening the second switch set; and if yes, maintaining the closed state of the first switch set to allow the separated energy storage unit to be put into operation.

Further, when the current detection unit detects that the current exceeds a current limit value, the control method comprises: opening the DC switch and putting the current limiting resistor into operation, and the current limit value does not exceed a maximum breakable current value of the DC switch; opening the second switch set; and opening the first switch set to enter into an off-line state.

An embodiment of the present application further provides a control method of the distributed energy storage system described above, wherein when the energy storage unit separated converter runs independently of other energy storage unit separated converters, the control method comprises: opening all the second switch sets; closing all the first switch sets; and starting all the power electronic conversion units.

Further, after opening all the second switch sets, the method further comprises: opening all the DC switches.

Further, when the distributed converters share the separated energy storage units, the control method comprises: closing all the first switch sets; opening all the DC switches; closing all the second switch sets; closing all the DC switches after DC voltages of the energy storage unit separated converters are balanced; and starting all the power electronic conversion units.

Further, when the distributed converters share the separated energy storage units and in the case that the power electronic unit of one of the energy storage unit separated converters fails, the control method further comprises: opening the DC switch in the energy storage unit separated converter wherein a current exceeding a current limit action threshold is detected; determining the faulted energy storage unit separated converter; opening the second switch set and the first switch set of the faulted energy storage unit separated converter; closing the DC switches in other energy storage unit separated converters after the DC voltages of the other energy storage unit separated converters are balanced; closing the second switch set of the faulted energy storage unit separated converter; and closing the DC switch of the faulted energy storage unit separated converter after a voltage of the separated energy storage unit of the faulted energy storage unit separated converter is within a predetermined range.

An embodiment of the present application further provides a control method of the distributed coordinated control system for energy storage units described above, comprising : receiving, by each of the M distributed energy storage controller, an instruction from the main controller, wherein the main controller sends the instruction after controlling a main converter to start and detecting that a DC bus voltage is stable; and based on the instruction, controlling all the first switch sets and all the second switch sets to close or open and all the power electronic conversion units to start or stop.

Further, when the instruction is a start instruction, the step of controlling all the first switch sets and all the second switch sets to close or open and all the power electronic conversion units to start or stop based on the instruction comprises: controlling all the first switch sets to close; controlling all the second switch sets to close; starting all the power electronic conversion units after confirming that the positions of all the switch sets are correct; and feeding back a successful starting command to the main controller.

Further, when the instruction is an energy storage unit input instruction, the step of controlling all the first switch sets and all the second switch sets to close or open and all the power electronic conversion units to start or stop based on the instruction comprises: controlling all the first switch sets to open; controlling all the second switch sets to close; and feeding back a successful input command to the main controller after confirming that the positions of all the switch sets are correct.

Further, when a power electronic conversion unit fails temporarily, the control method further comprises: locking, by the distributed energy storage controller in communication connection, the power electronic conversion unit; and restarting the power electronic conversion unit after failure disappears.

Further, when a power electronic conversion unit has a permanent fault, the control method comprises: locking, by the distributed energy storage controller in communication connection, the fault power electronic conversion unit; and opening the first switch set.

According to the technical scheme provided by the embodiments of the present application, when a converter stops working, the energy storage units of the idle converter can be utilized, the energy storage units can be separated from the converter by a switch, and the converter is connected to the DC bus to provide energy storage capacity for the DC bus, thus improving the utilization rate of equipment; and the energy storage units are easy to expand, and the energy storage units can be separated from the converter, so the capacity increase of the energy storage units does not affect the converter, which facilitates capacity expansion.

### Brief Description of the Drawings

In order to explain the technical scheme in the embodiments of the present application more clearly, the drawings used in the description of the embodiments will be briefly introduced below. Obviously, the drawings in the following description are only some embodiments of the present application, and for those ordinarily skilled in the field, other drawings can be obtained according to these drawings without paying creative labor.
Fig. 1 is a topological diagram of an energy storage unit separated converter according to an embodiment of the present application;
Fig. 2 is a topological diagram of an energy storage unit separated converter according to another embodiment of the present application;
Fig. 3 is a topological diagram of a DC-DC converter according to an embodiment of the present application;
Fig. 4 is a topological diagram of an AC-DC converter according to an embodiment of the present application;
Fig. 5 is a composition diagram of an energy storage unit separated converter with an AC-DC converter according to an embodiment of the present application;
Fig. 6 is a composition diagram of an energy storage unit separated converter with an AC-DC converter according to another embodiment of the present application;
Fig. 7 is a composition diagram of an energy storage unit separated converter with a DC-DC converter according to an embodiment of the present application;
Fig. 8 is a composition diagram of an energy storage unit separated converter with a DC-DC converter according to another embodiment of the present application;
Fig. 9 is a topological diagram of a distributed energy storage system according to an embodiment of the present application;
Fig. 10 is an application topological diagram of an energy storage unit separated converter according to an embodiment of the present application;
Fig. 11 is a diagram of a DC switch according to an embodiment of the present application;
Fig. 12 is a system topological diagram when an energy storage unit separated converter operates in an independent mode according to an embodiment of the present application;
Fig. 13 is a system topological diagram when energy storage units of an energy storage unit separated converter are shared according to an embodiment of the present application;
Fig. 14 is a diagram of energy storage unit separated converter 1 according to an embodiment of the present application in which a power electronic conversion unit fails; and
Fig. 15 is a topological diagram of a distributed coordinated control system for energy storage units according to an embodiment of the present application.

### Detailed Description of Embodiments

In order to make the purposes, technical schemes and advantages of the embodiments of the present application clearer, the specific implementations of the technical schemes of the present application will be more clearly described in further detail with reference to the drawings and embodiments. However, the specific implementations and embodiments described below are merely for the purpose of illustration, and are not a limitation of the present application. They only cover some embodiments, but not all embodiments of the present application. Other embodiments obtained by those skilled in the art for various changes of the present application belong to the scope of protection of the present application.

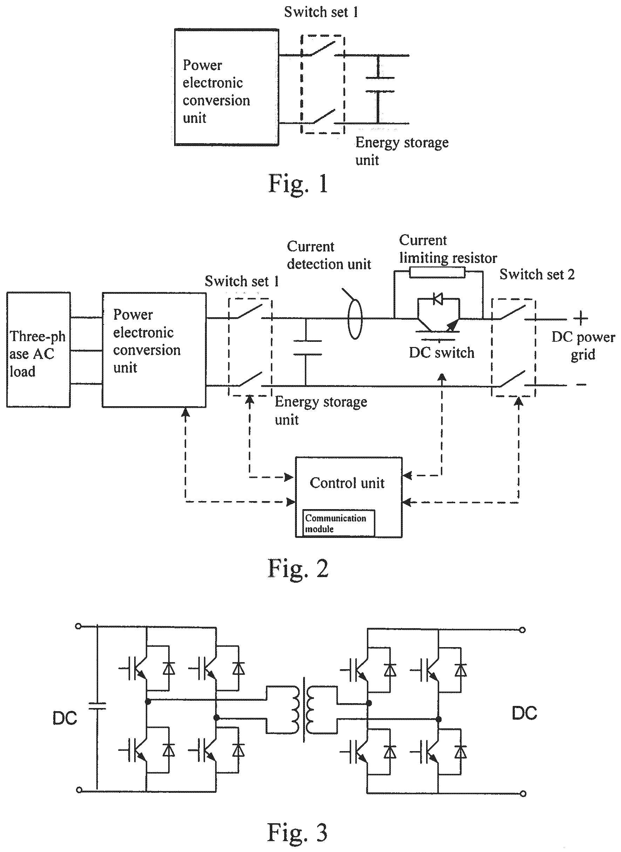

Fig. 1 is a topological diagram of an energy storage unit separated converter according to an embodiment of the present application. As shown in Fig. 1, the energy storage unit separated converter in the present embodiment comprises a power electronic conversion unit, a separated energy storage unit and a first switch set, wherein the first switch set is in series connection between the energy storage unit and a DC side of the power electronic conversion unit, and the energy storage unit and the power electronic conversion unit are separable from each other by separating a positive electrode switch and a negative electrode switch in the first switch set.

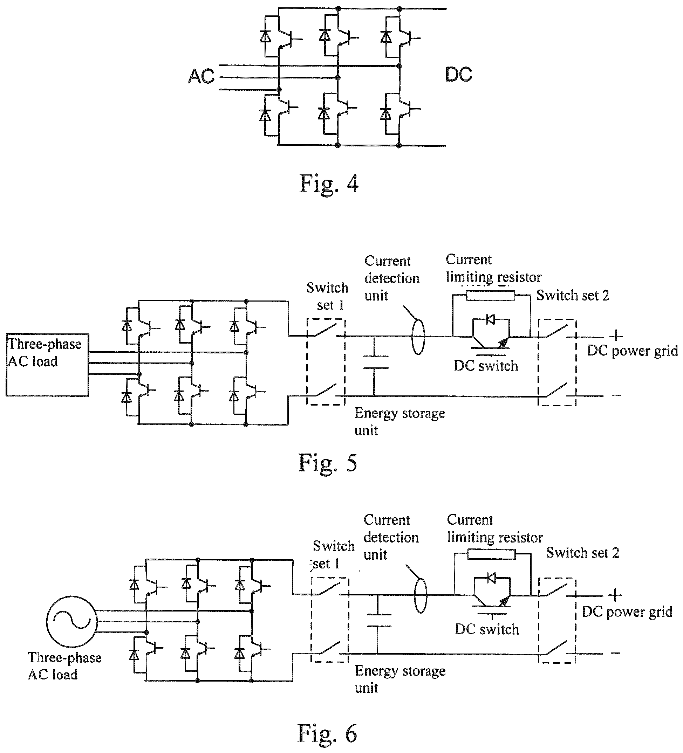

The power electronic conversion unit comprises, but is not limited to, a DC-DC converter or an AC-DC converter. Fig. 3 is a topological diagram of a DC-DC converter according to an embodiment of the present application. Fig. 4 is a topological diagram of an AC-DC converter according to an embodiment of the present application.

In an embodiment, the power electronic conversion unit is an AC-DC converter, a DC output end of the AC-DC converter is connected to the first switch set, and the other end of the AC-DC converter is connected to a three-phase AC load, as shown in Fig. 5 which is a composition diagram of an energy storage unit separated converter with an AC-DC converter according to an embodiment of the present application.

In another embodiment, the power electronic conversion unit is an AC-DC converter, wherein a DC output end of the AC-DC converter is connected to the first switch set, and the other end of the AC-DC converter is connected to a three-phase AC power supply, as shown in Fig. 6 which is a composition diagram of an energy storage unit separated converter with an AC-DC converter according to another embodiment of the present application.

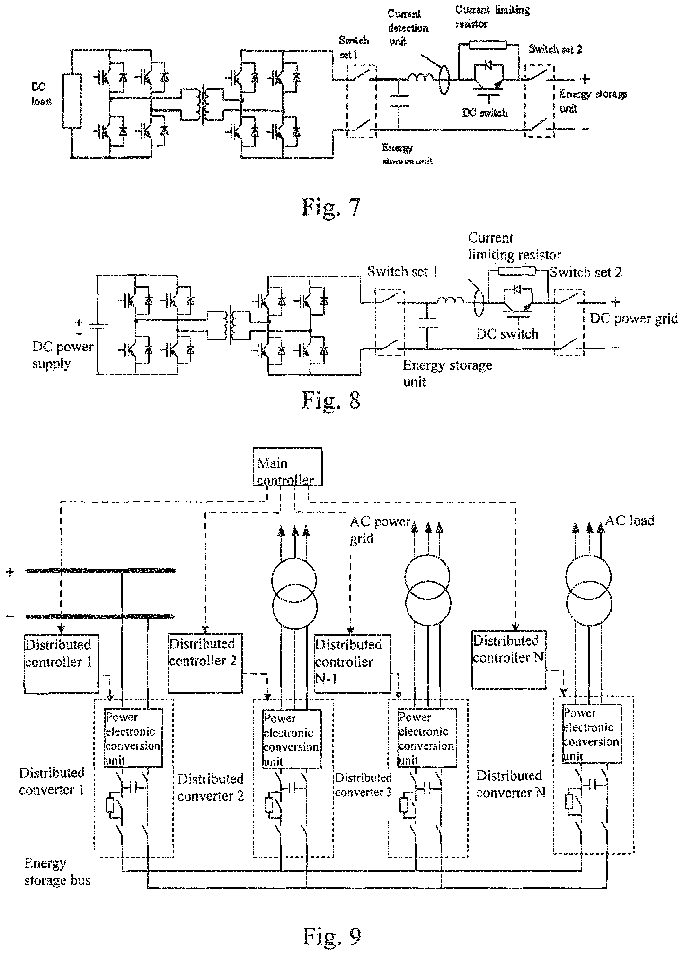

In still another embodiment, the power electronic conversion unit is a DC-DC converter, wherein a DC output end of the DC-DC converter is connected to the first switch set, and the other end of the DC-DC converter is connected to a DC load, as shown in Fig. 7 which is a composition diagram of an energy storage unit separated converter with a DC-DC converter according to an embodiment of the present application.

In yet another embodiment, the power electronic conversion unit is a DC-DC converter, wherein a DC output end of the DC-DC converter is connected to the first switch set, and the other end of the DC-DC converter is connected to a DC power supply, as shown in Fig. 8 which is a composition diagram of an energy storage unit separated converter with a DC-DC converter according to another embodiment of the present application.

The separated energy storage unit in the separated converter is designed to be easily separated from the power electronic conversion unit in structure.

Fig. 2 is a topological diagram of an energy storage unit separated converter according to another embodiment of the present application. As shown in Fig. 2, the energy storage unit separated converter in the present embodiment comprises a power electronic conversion unit, a separated energy storage unit and a first switch set, wherein the first switch set is in series connection between the energy storage unit and a DC side of the power electronic conversion unit, and the energy storage unit and the power electronic conversion unit may be separated by separating a positive electrode switch and a negative electrode switch in the first switch set.

As an alternative scheme, the energy storage unit separated converter may further comprise a second switch set connected in series between the energy storage unit and a DC power grid.

As an alternative scheme, the energy storage unit separated converter may further comprise a DC switch and a current limiting resistor which are connected in parallel, wherein a combination of the DC switch and the current limiting resistor is connected in series between the DC power grid and the energy storage unit. In the present embodiment, the DC switch is, but not limited to, an IGBT.

By adding a current limiting device between the energy storage unit and the DC power grid, the situation that instantaneous current is too large, causing damage to equipment in a DC short circuit or during charging and discharging of a capacitor can be avoided.

As an alternative scheme, the energy storage unit separated converter may further comprise a current detection unit for detecting a current flowing between a DC power grid and the energy storage unit.

As an alternative scheme, the energy storage unit separated converter may further comprise a current limiting inductor connected in series between a DC power grid and the energy storage unit.

The energy storage unit separated converter also comprises a control unit for controlling the power electronic conversion unit, the first switch set, the second switch set and the DC switch. The control unit is arranged close to the separated energy storage unit, and controls the energy storage unit when the power electronic conversion unit stops running.

The control unit in the energy storage unit separated converter further comprises a communication module and a control module, wherein the communication module receives an external instruction, and the control module controls the power electronic conversion unit and the first switch set based on the external instruction; and when the converter comprises the second switch set or/and the DC switch, the control module also controls the second switch set or/and the DC switch.

An embodiment of the present application further provides a control method of the energy storage unit separated converter, comprising : stopping the power electronic conversion unit and opening the first switch set, when the power electronic conversion unit is needed to be separated from the energy storage unit.

When the energy storage unit separated converter comprises a control unit, a second switch set or/and a DC switch and a current limiting resistor connected in parallel, the converter is in an off-line state, the first switch set, the second switch set and the DC switch are in an open state, and the control unit receives an energy storage unit input instruction, the control method further comprises: closing the second switch set or/and the DC switch to enter into an energy storage input state.

When the energy storage unit separated converter comprises a control unit, a second switch set or/and a DC switch and a current limiting resistor connected in parallel, the converter is in an off-line state, the first switch set, the second switch set and the DC switch are in an open state, and when the control unit receives a grid connection instruction, the control method comprises: closing the first switch set; closing the second switch set or/and the DC switch; and starting the power electronic conversion unit to enter into a grid connection state.

When a device runs in a grid-connected state, the control unit detects a failure of the power electronic conversion unit, the control method comprises: stopping the power electronic conversion unit; opening the first switch set; judging whether or not the failure is eliminated; if not, opening the second switch set; and if yes, maintaining the closed state of the first switch set to allow the energy storage unit to be put into operation.

When the converter is in an energy storage input state or a grid-connected state, the energy storage unit separated converter comprises a current detection unit and the current detection unit detects that the current exceeds a current limit value, the control method comprises: opening the DC switch and putting the current limiting resistor into operation; opening the second switch set; and opening the first switch set to enter into an off-line state. The current limit value shall not exceed a maximum breakable current value of the DC switch. In the present embodiment, the maximum breakable current of the DC switch IGBT is 3000 A, and the current limit value is designed to be 2500 A, leaving a certain margin.

Fig. 9 is a topological diagram of a distributed energy storage system according to an embodiment of the present application.

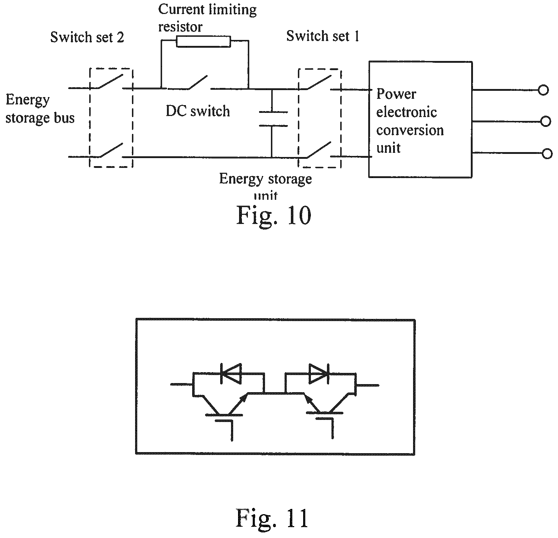

As shown in Fig. 9, the distributed energy storage system comprises: an energy storage bus, N energy storage unit separated converters described above wherein N ≥ 2, and a second switch set. The energy storage unit separated converter comprises a power electronic conversion unit, at least one energy storage unit and a first switch set, wherein the first switch set is in series connection between the energy storage unit and a DC side of the power electronic conversion unit, and the energy storage unit and the power electronic conversion unit are separable from each other by separating a positive electrode switch and a negative electrode switch in the first switch set. The second switch set is connected in series between the energy storage unit and the energy storage bus, and the energy storage unit and the energy storage bus are separable from each other by separating a positive electrode switch and a negative electrode switch in the second switch set, as shown in Fig. 10 which is an application topological diagram of an energy storage unit separated converter according to an embodiment of the present application.

When the power electronic conversion unit is a DC-DC converter, one end of the DC-DC converter is connected to the separated energy storage unit, and the other end serves as a DC output end. When the power electronic conversion unit is a DC-AC converter, a DC end of the DC-AC converter is connected to the separated energy storage unit, and the other end serves as an AC output end.

According to the technical scheme provided by the present embodiment, the energy storage units in each of the distributed converters can be shared by the separable design of the energy storage bus and the energy storage units. When the capacity of a single energy storage unit is insufficient, an energy storage unit with excess energy storage capacity can be controlled to serve as a supplement, which greatly improves the utilization rate of the energy storage capacity of a system.

The converter further comprises a DC switch and a current limiting resistor which are connected in parallel, and the DC switch and the current limiting resistor are connected in series between the second switch set and the energy storage bus after parallel connection.

The current limiting resistor and a bypass switch are connected in parallel to form a current limiting unit, which can effectively limit the charging and discharging current in the process of mutual support of the distributed energy storage units, and limit the short-circuit current when a short-circuit fault occurs in the system, thus improving the reliability of the system.

The distributed type energy storage system also comprises N distributed energy storage controllers wherein N≥2and one main controller, and each of the distributed energy storage controllers controls one corresponding energy storage unit separated converter. The main controller communicates with the N distributed energy storage controllers.

Fig. 11 is a diagram of a DC switch according to an embodiment of the present application, wherein the DC switch comprises, but is not limited to, two power semiconductor switching devices provided with anti-parallel diodes and connected in reverse series.

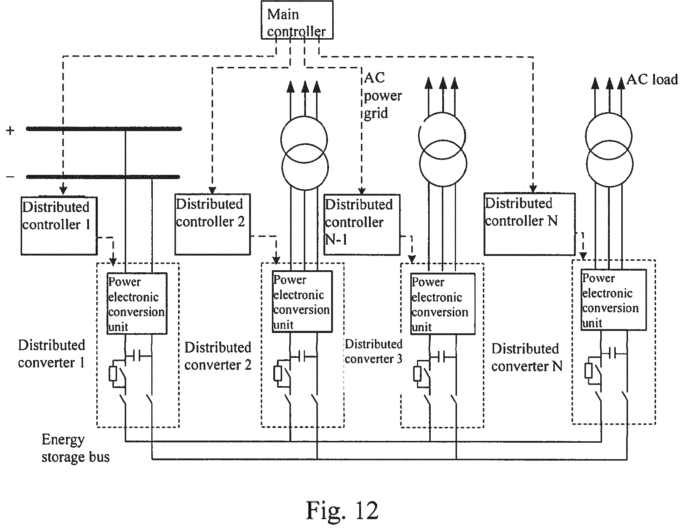

An embodiment of the present application further provides a control method of the distributed energy storage system. Fig. 12 is a system topological diagram when an energy storage unit separated converter operates in an independent mode according to an embodiment of the present application.

As shown in Fig. 12, when the energy storage unit separated converter runs independently, the control method comprises: opening all the second switch sets of the energy storage unit separated converter; closing all the first switch sets; and starting all the power electronic conversion units.

When the energy storage unit separated converter comprises a DC switch and a current limiting resistor connected in parallel, after the step of opening all the second switch sets, the method further comprises: opening all the DC switches. The final state is as shown in Fig. 12.

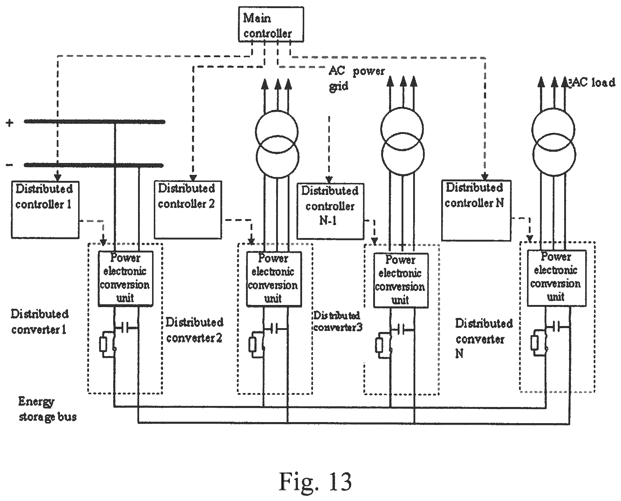

Fig. 13 is a system topological diagram when energy storage units of an energy storage unit separated converter are shared according to an embodiment of the present application.

As shown in Fig. 13, when the energy storage unit separated converter comprises a DC switch and a current limiting resistor connected in parallel, and the distributed converters share the energy storage units, the control method comprises: closing all the first switch sets of the energy storage unit separated converter; opening all the DC switches; closing all the second switch sets; closing all the DC switches after the DC voltages of the energy storage unit separated converters are balanced; and starting all the power electronic conversion units. The final state is as shown in Fig. 13.

Through coordinated control, the system can run in both centralized and shared energy storage mode and independent energy storage mode, with good flexibility and high cost performance.

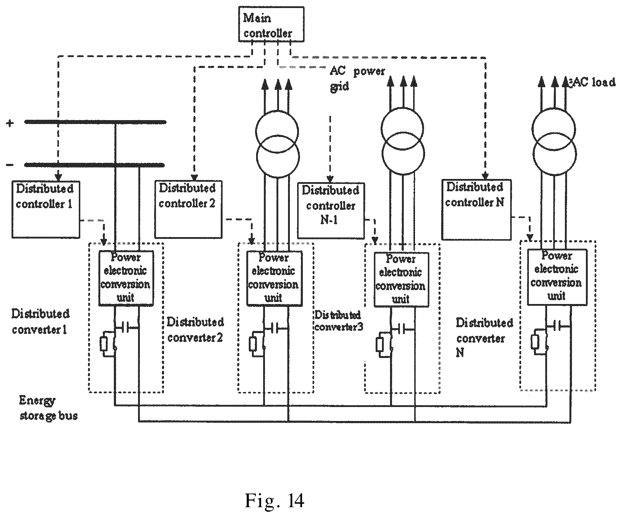

Fig. 14 is a diagram of energy storage unit separated converter 1 according to an embodiment of the present application in which a power electronic conversion unit fails.

As shown in Fig. 14, when the distributed converters share the energy storage units and the power electronic unit of one of the energy storage unit separated converters fails, the control method further comprises: opening the DC switch after the energy storage unit separated converter detects that a current exceeds a current limit action threshold; determining the faulted energy storage unit separated converter; opening the second switch set and the first switch set of the faulted energy storage unit separated converter; closing the DC switches in other energy storage unit separated converters after the DC voltages of the other energy storage unit separated converters are balanced; closing the second switch set of the faulted energy storage unit separated converter; and closing the DC switch of the faulted energy storage unit separated converter after the DC capacitor voltage of the faulted energy storage unit separated converter is normal. The final state is as shown in Fig. 14.

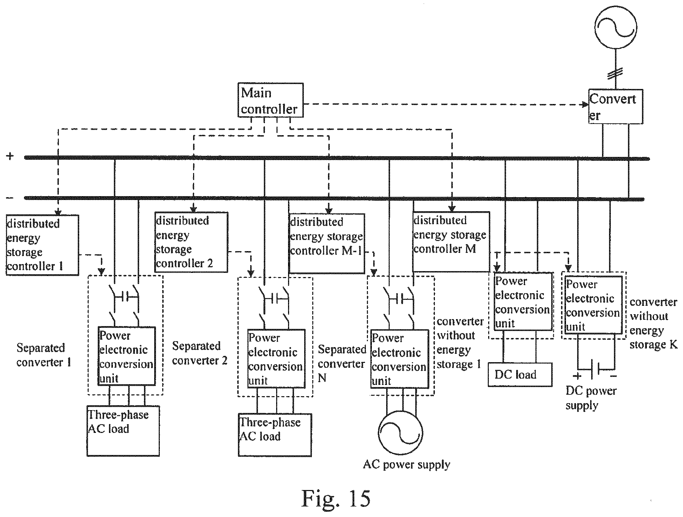

Fig. 15 is a topological diagram of a distributed coordinated control system for energy storage units according to an embodiment of the present application.

As shown in Fig. 15, the coordinated control system comprises N energy storage unit separated converters wherein N ≥ 2, M distributed type energy storage controllers wherein M ≥ 2, and a main controller, and the energy storage unit separated converter also comprises a second switch set.

In the present embodiment, N = 3 and M = 4, and the main controller can communicate with the four distributed energy storage controllers. The energy storage unit separated converter comprises a power electronic converter, an energy storage unit, a first switch set 1 and a second switch set 2. The first switch set is connected in series between the energy storage unit and a DC side of the power electronic converter, and the energy storage unit can be separated from the power electronic converter by separating a positive electrode switch and a negative electrode switch in the first switch set. The second switch set is connected in series between the energy storage unit and a DC power grid.

The power electronic conversion unit in the energy storage unit separated converter can be a DC-DC converter, one end of which is connected to the first switch set, and the other end is connected to a DC load or a DC power supply. The power electronic conversion unit in the energy storage unit separated converter can be an AC-DC converter, a DC end of which is connected to the first switch set, and an AC end is connected to an AC load or an AC power supply.

The coordinated control system also comprises K converters without energy storage wherein K ≥ 1, and each of the converters without energy storage comprises a power electronic conversion unit. In the present embodiment, K = 2.

The power electronic conversion unit in the converter without energy storage can be a DC-DC converter, one end of which is connected to a DC power grid, and the other end is connected to a DC load or a DC power supply. The power electronic conversion unit in the converter without energy storage can be an AC-DC converter, a DC end of which is connected to a DC power grid, and an AC end is connected to an AC load or an AC power supply.

The number of the distributed type energy storage controllers meets M ≤ (N+K), and 4<(2+3) in the present embodiment.

One-to-one communication can be conducted between the distributed energy storage controllers and the separated converters or the converters without energy storage. As shown in Fig. 9, one-to-one communication is conducted between the energy storage controllers 1, 2 and M-1 and 3 energy storage unit separated converters.

One-to-many communication can also be conducted between the distributed energy storage controllers and the separated converters or the converters without energy storage. As shown in Fig. 9, one-to-two communication is realized between the energy storage controller M and two converters without energy storage.

The distributed energy storage controller in the present embodiment controls opening and closing of the first switch set and the second switch set in the separated energy storage unit communicated with the distributed energy storage controller.

The control system in the present embodiment also comprises a main converter being an AC-DC converter, an AC side of which is connected to an AC power supply, and a DC side of which is connected to a DC power grid.

The distributed energy storage controller in the present embodiment receives active and reactive power values sent by the main controller to control the power electronic conversion unit to respond to an instruction.

An embodiment of the present application further provides a control method of the distributed coordinated control system for energy storage units described above, comprising :
when the energy storage unit separated converter and the main converter are in an off-line state, and the first switch set and the second switch set are in an open state, receiving, by the distributed energy storage controller, an instruction from the main controller, wherein the main controller sends the instruction after controlling the main converter to start and detecting that a DC bus voltage is stable; and based on the instruction, controlling, by the distributed energy storage controller, the first switch set to close or open and the second switch set and the power electronic conversion unit to start or stop.

When the energy storage unit separated converter and the main converter are in an off-line state, and the first switch set and the second switch set are in an open state, the main controller controls the main converter to start after receiving a grid connection instruction or energy storage unit input instruction, and then sends the instruction to the distributed energy storage controller.

When the instruction is a start instruction, the step of controlling, by the distributed type energy storage controller, the first switch set and the second switch set to close or open and the power electronic conversion unit to start or stop based on the instruction comprises: controlling, by the distributed energy storage controller, all the first switch sets to close; controlling all the second switch sets to close; starting the power electronic conversion unit after confirming that the positions of all the switch sets are correct; and feeding back a successful starting command to the main controller.

When the instruction is an energy storage unit input instruction, the step of controlling, by the distributed energy storage controller, the first switch set and the second switch set to close or open and the power electronic conversion unit to start or stop based on the instruction comprises: controlling, by the distributed energy storage controller, all the first switch sets to open; controlling all the second switch sets to close; and feeding back a successful input command to the main controller after confirming that the positions of all the switch sets are correct.

The energy storage units can be put into operation completely or partially according to the actual situation under the coordinated control of the main controller.

When the energy storage unit separated converter is in an on-line state, the first switch set and the second switch set are in a closed state, and the power electronic conversion unit fails temporarily, the control method further comprises: locking, by the distributed energy storage controller, the power electronic conversion unit; and restarting the power electronic conversion unit after the failure disappears.

When the energy storage unit separated converter is in an on-line state, the first switch set and the second switch set are in a closed state, and the power electronic conversion unit has a permanent fault, the control method comprises: locking, by the distributed energy storage controller, the power electronic conversion unit; and opening the first switch set.

In the present embodiment, when the converter stops working, the energy storage units of the idle converter can be utilized, the energy storage units can be separated from the converter by a switch, and the converter is connected to the DC bus to provide energy storage capacity for the DC bus, thus improving the utilization rate of equipment; the system of the present application also comprises a non-energy storage converter, which can utilize the energy storage units in the adjacent energy storage unit separated converter, thereby realizing the sharing among equipment and reducing the total cost of the system; and through coordinated control, the energy storage units can be effectively utilized and the voltage distributed on the DC bus is stable. Compared with centralized energy storage, distributed energy storage can make the DC bus voltage evenly distributed and avoid a ring current. By connecting all the equipment into the control system, the equipment status of the whole network can be collected as a criterion for real-time control, and once a unit fault is detected, the coordinated control strategy can be adjusted in time to improve the operation reliability of the system.

## Claims

1. An energy storage unit separated converter, comprising:
a power electronic conversion unit, and
at least one separated energy storage unit and a first switch set, wherein the first switch set is in series connection between the separated energy storage unit and a DC side of the power electronic conversion unit, and the at least one separated energy storage unit and the power electronic conversion unit are configured to be separable from each other by separating a positive electrode switch and a negative electrode switch in the first switch set;
**characterised in that**
the energy storage unit separated converter further comprises:
a DC switch and a current limiting resistor connected in parallel, wherein a combination of the DC switch and the current limiting resistor is connected in series between the at least one separated energy storage unit and a DC power grid; and
a second switch set connected in series between the at least one separated energy storage unit and the DC power grid or an energy storage bus, wherein the at least one separated energy storage unit and the energy storage bus is configured to be separable by separating a positive electrode switch and a negative electrode switch in the second switch set.

2. The energy storage unit separated converter according to claim 1, wherein the power electronic conversion unit comprises:
a DC-DC converter having one end connected to the first switch set and another end connected to a DC load or a DC power supply; or
an AC-DC converter or a DC-AC converter, wherein a DC end of the AC-DC converter is connected to the first switch set, an AC end of the AC-DC converter is connected to an AC load or an AC power supply, a DC end of the DC-AC converter is connected to the first switch set, and an AC end of the DC-AC converter is configured to be used as an AC output end.

3. The energy storage unit separated converter according to claim 1, wherein the converter further comprises:
a current detection unit being configured to detect a current flowing between the at least one separated energy storage unit and the DC power grid; or
a current limiting inductor connected in series between the at least one separated energy storage unit and the DC power grid;
wherein, the DC switch comprises two power semiconductor switching devices provided with anti-parallel diodes and connected in reverse series.

4. The energy storage unit separated converter according to any one of claims 1-3, wherein the energy storage unit separated converter further comprises:
a distributed energy storage controller being configured to control one or more of the power electronic conversion unit , the first switch set, the second switch set and the DC switch;
the distributed energy storage controller comprises:
a communication module for receiving an external instruction; and
a control module being configured to control the power electronic conversion unit and the first switch set based on the external instruction, wherein:
the control module is also configured to control the second switch set or/and the DC switch;
the distributed energy storage controller is arranged close to the separated energy storage unit, and is configured to control the separated energy storage unit in the condition that the power electronic conversion unit stops running.

5. A distributed energy storage system, comprising:
an energy storage bus and N energy storage unit separated converters according to any one of claims 1-3, wherein N ≥ 2, and the energy storage unit separated converters are connected in parallel to the energy storage bus; and N distributed energy storage controllers according to claim 4, each of which being configured to control the respective energy storage unit separated converter one to one; and
a master controller being configured to communicate with the N distributed energy storage controllers.

6. A distributed coordinated control system for energy storage units, comprising:
N energy storage unit separated converters according to any one of claims 1-3 wherein N ≥ 2;
M distributed type energy storage controllers according to claim 4 wherein M ≥ 2; and
a main controller being configured to communicate with the distributed type energy storage controllers;
K converters without energy storage, each of which comprises a power electronic conversion unit, wherein K ≥ 1;
wherein a number of the M distributed type energy storage controllers meets M ≤ (N+K).

7. The distributed coordinated control system for energy storage units according to claim 6, wherein one-to-one communication or one-to-many communication is configured to be conducted between the distributed type energy storage controllers and the energy storage unit separated converters or the K converters without energy storage ; or
each of the M distributed type energy storage controllers is configured to control opening and closing of the first switch set and the second switch set in the energy storage unit separated converter by established communication connection with the distributed type energy storage controller; or
the distributed energy storage controller is configured to receive active and reactive power values sent from the main controller to control the power electronic conversion unit.

8. The distributed coordinated control system for energy storage units according to claim 6, further comprising:
the main converter being an AC-DC converter having an AC side connected to an AC power supply and a DC side connected to a DC power grid.

9. A control method of the energy storage unit separated converter according to claim 4, comprising:
stopping the power electronic conversion unit and opening the first switch set, when the power electronic conversion unit is needed to be separated from the separated energy storage unit; or
closing the second switch set or/and the DC switch to enter into an energy storage input state, when the control module receives an energy storage unit input instruction; or
in the case that the control module receives a grid connection instruction, the control method comprises:
closing the first switch set;
closing the second switch set or/and the DC switch; and
starting the power electronic conversion unit to enter into a grid connection state.

10. The control method of the energy storage unit separated converter according to claim 9, wherein when the control module detects a failure of the power electronic conversion unit, the control method comprises:
stopping the power electronic conversion unit;
opening the first switch set;
judging whether or not the failure is eliminated;
if not, opening the second switch set; and
if yes, maintaining a closed state of the first switch set to allow the separated energy storage unit to be put into operation; or
when the current detection unit detects that a current exceeds a current limit value, the control method comprises:
opening the DC switch and putting the current limiting resistor into operation, so that the current limit value does not exceed a maximum breakable current value of the DC switch;
opening the second switch set; and
opening the first switch set to enter into an off-line state.

11. A control method of the distributed energy storage system according to claim 5, wherein when the energy storage unit separated converter runs independently of other energy storage unit separated converters, the control method comprises:
opening all the second switch sets;
closing all the first switch sets; and
starting all the power electronic conversion units; or
when the energy storage unit separated converters share the separated energy storage units, the control method comprises:
closing all the first switch sets;
opening all the DC switches;
closing all the second switch sets;
closing all the DC switches after DC voltages of the energy storage unit separated converters are balanced; and
starting all the power electronic conversion units.

12. The control method of the distributed energy storage system according to claim 11, wherein after opening all the second switch sets, the method further comprises:
opening all the DC switches; or
in the case that the power electronic conversion unit of one of the energy storage unit separated converters fails, the control method further comprises:
opening the DC switch in the energy storage unit separated converter when a current exceeding a current limit action threshold is detected;
determining the faulted energy storage unit separated converter;
opening the second switch set and the first switch set of the faulted energy storage unit separated converter;
closing the DC switches in other energy storage unit separated converters after DC voltages of the other energy storage unit separated converters are balanced;
closing the second switch set of the faulted energy storage unit separated converter; and
closing the DC switch of the faulted energy storage unit separated converter after a voltage of the separated energy storage unit of the faulted energy storage unit separated converter is within a predetermined range .

13. A control method of the distributed coordinated control system for energy storage units according to claim 8, comprises:
receiving, by each of the M distributed energy storage controller, an instruction from the main controller, wherein the main controller sends the instruction after controlling a main converter to start and detecting that a DC bus voltage is stable; and
controlling all the first switch sets and all the second switch sets to open or close and all the power electronic conversion units to start or stop, based on the instruction.

14. The control method of the distributed coordinated control system for energy storage units according to claim 13, wherein when the instruction is a start instruction, the step of controlling all the first switch sets and all the second switch sets to close or open and all the power electronic conversion units to start or stop based on the instruction comprises:
controlling all the first switch sets to close;
controlling all the second switch sets to close;
starting all the power electronic conversion units after confirming that positions of all the switch sets are correct; and
feeding back a successful starting command to the main controller; or
when the instruction is an energy storage unit input instruction, the step of controlling all the first switch sets and all the second switch sets to close or open and all the power electronic conversion units to start or stop based on the instruction comprises:
controlling all the first switch sets to open;
controlling all the second switch sets to close; and
feeding back a successful input command to the main controller after confirming that positions of all the first and second switch sets are correct.

15. The control method of the distributed coordinated control system for energy storage units according to claim 14, wherein when a power electronic conversion unit fails temporarily, the control method further comprises:
locking, by the distributed energy storage controller in communication connection, the power electronic conversion unit; and
restarting the power electronic conversion unit after the failure disappears; or
when a power electronic conversion unit has a permanent fault, the control method comprises:
locking, by the distributed energy storage controller in communication connection, the fault power electronic conversion unit; and
opening the first switch set.

## Patentansprüche

1. Von einer Energiespeichereinheit getrennter Wandler, umfassend:
eine Leistungselektronikwandlereinheit und
wenigstens eine getrennte Energiespeichereinheit und einen ersten Schaltersatz, wobei der erste Schaltersatz zwischen die getrennte Energiespeichereinheit und eine DC-Seite der Leistungselektronikwandlereinheit in Reihe geschaltet ist, und wobei die wenigstens eine getrennte Energiespeichereinheit und die Leistungselektronikwandlereinheit dazu konfiguriert sind, voneinander trennbar zu sein, indem ein Schalter der positiven Elektrode und ein Schalter der negativen Elektrode in dem ersten Schaltersatz getrennt werden;
**dadurch gekennzeichnet, dass**
der von einer Energiespeichereinheit getrennte Wandler ferner umfasst:
einen DC-Schalter und einen Strombegrenzungswiderstand, die parallel geschaltet sind, wobei eine Kombination des DC-Schalters und des Strombegrenzungswiderstand zwischen die wenigstens eine getrennte Energiespeichereinheit und ein DC-Stromnetz in Reihe geschaltet ist; und
einen zweiten Schaltersatz, der zwischen die wenigstens eine getrennte Energiespeichereinheit und das DC-Stromnetz oder eine Energiespeicherungsverteilerschiene in Reihe geschaltet ist, wobei die wenigstens eine getrennte Energiespeichereinheit und die Energiespeicherungsverteilerschiene dazu konfiguriert sind, voneinander trennbar zu sein, indem ein Schalter der positiven Elektrode und ein Schalter der negativen Elektrode in dem zweiten Schaltersatz getrennt werden.

2. Von einer Energiespeichereinheit getrennter Wandler nach Anspruch 1, wobei die Leistungselektronikwandlereinheit umfasst:
einen DC-DC Wandler, dessen eines Ende mit dem ersten Schaltersatz verbunden ist und dessen anderes Ende mit einem DC-Verbraucher oder einer DC-Leistungsversorgung verbunden ist; oder
einen AC-DC Wandler oder einen DC-AC-Wandler, wobei ein DC-Ende des AC-DC-Wandlers mit dem ersten Schaltersatz verbunden ist, ein AC-Ende des AC-DC-Wandlers mit einem AC-Verbraucher oder einer AC-Leistungsversorgung verbunden ist, ein DC-Ende des DC-AC-Wandlers mit dem ersten Schaltersatz verbunden ist und ein AC-Ende des DC-AC-Wandler dazu konfiguriert ist, als ein AC-Ausgangsende verwendet zu werden.

3. Von einer Energiespeichereinheit getrennter Wandler nach Anspruch 1, wobei der Wandler ferner umfasst:
eine Stromerfassungseinheit, die dazu konfiguriert ist, einen Strom zu erfassen, der zwischen der wenigstens einen getrennten Energiespeichereinheit und dem DC-Stromnetz fließt; oder
einen Strombegrenzungsinduktor, der zwischen die wenigstens eine getrennte Energiespeichereinheit und das DC-Stromnetz in Reihe geschaltet ist;
wobei der DC-Schalter zwei Leistungshalbleiterschaltvorrichtungen umfasst, die mit Antiparalleldioden versehen und umgekehrt in Reihe geschaltet sind.

4. Von einer Energiespeichereinheit getrennter Wandler nach einem der Ansprüche 1 bis 3, wobei der von einer Energiespeichereinheit getrennte Wandler ferner umfasst:
eine Steuereinrichtung zur verteilten Energiespeicherung, die dazu konfiguriert ist, eines oder mehrere von der Leistungselektronikwandlereinheit, dem ersten Schaltersatz, dem zweiten Schaltersatz und dem DC-Schalter zu steuern;
wobei die Steuereinrichtung zur verteilten Energiespeicherung umfasst:
ein Kommunikationsmodul zum Empfangen einer externen Anweisung; und
ein Steuermodul, das dazu konfiguriert ist, die Leistungselektronikwandlereinheit und den ersten Schaltersatz auf Grundlage der externen Anweisung zu steuern, wobei:
das Steuermodul außerdem dazu konfiguriert ist, den zweiten Schaltersatz oder/und den DC-Schalter zu steuern;
wobei die Steuereinrichtung zur verteilten Energiespeicherung dazu ausgelegt ist, die getrennte Energiespeichereinheit zu schließen, und dazu konfiguriert ist, die getrennte Energiespeichereinheit in dem Zustand zu steuern, in dem die Leistungselektronikwandlereinheit nicht mehr läuft.

5. System zur verteilten Energiespeicherung, umfassend:
eine Energiespeicherungsverteilerschiene und N von einer Energiespeichereinheit getrennte Wandler nach einem der Ansprüche 1-3, wobei N≥2, und wobei die von einer Energiespeichereinheit getrennten Wandler mit der Energiespeicherungsverteilerschiene parallel geschaltet sind; und N Steuereinrichtungen zur verteilten Energiespeicherung nach Anspruch 4, von denen jede dazu konfiguriert ist, eins zu eins einen von einer Energiespeichereinheit getrennten Wandler zu steuern; und
eine übergeordnete Steuereinrichtung, die dazu konfiguriert ist, mit den N Steuereinrichtungen zur verteilten Energiespeicherung zu kommunizieren.

6. System zur verteilten koordinierten Steuerung für Energiespeichereinheiten, umfassend:
N von einer Energiespeichereinheit getrennte Wandler nach einem der Ansprüche 1 bis 3, wobei N≥2;
M Steuereinrichtungen zur verteilten Energiespeicherung nach Anspruch 4, wobei M≥2; und
eine Hauptsteuereinrichtung, die dazu konfiguriert ist, mit den N Steuereinrichtungen zur verteilten Energiespeicherung zu kommunizieren;
K Wandler ohne Energiespeicherung, von denen jeder eine Leistungselektronikwandlereinheit umfasst, wobei K≥1;
wobei eine Anzahl der M Steuereinrichtungen zur verteilten Energiespeicherung M≤(N+K) erfüllt.

7. System zur verteilten koordinierten Steuerung für Energiespeichereinheiten nach Anspruch 6, wobei die Ausführung von Eins-zu-Eins-Kommunikation oder Eins-zu-Viele-Kommunikation zwischen den Steuereinrichtungen zur verteilten Energiespeicherung und den von einer Energiespeichereinheit getrennten Wandlern oder den K Wandlern ohne Energiespeicherung konfiguriert ist; oder
jede der M Steuereinrichtungen zur verteilten Energiespeicherung dazu konfiguriert ist, das Öffnen und Schließen des ersten Schaltersatzes und des zweiten Schaltersatzes in dem von einer Energiespeichereinheit getrennten Wandler durch eine hergestellte Kommunikationsverbindung mit der Steuereinrichtung zur verteilten Energiespeicherung zu steuern; oder
die Steuereinrichtung zur verteilten Energiespeicherung dazu konfiguriert ist, aktive und reaktive Leistungswerte zu empfangen, die von der Hauptsteuereinrichtung zum Steuern der Leistungselektronikwandlereinheit gesendet werden.

8. System zur verteilten koordinierten Steuerung für Energiespeichereinheiten nach Anspruch 6, ferner umfassend:
der Hauptwandler ist ein AC-DC-Wandler mit einer AC-Seite, die mit einer AC-Leistungsversorgung verbunden ist, und einer DC-Seite, die mit einem DC-Stromnetz verbunden ist.

9. Verfahren zum Steuern des von einer Energiespeichereinheit getrennten Wandlers nach Anspruch 4, umfassend:
Anhalten der Leistungselektronikwandlereinheit und Öffnen des ersten Schaltersatzes, wenn die Leistungselektronikwandlereinheit von der getrennten Energiespeichereinheit getrennt werden muss; oder
Schließen des zweiten Schaltersatzes oder/und des DC-Schalters, um einen Energieeinspeicherungszustand aufzurufen, wenn das Steuermodul eine Energieeinspeicherungsanweisung empfängt; oder
wobei das Steuerverfahren für den Fall, dass das Steuermodul eine Netzverbindungsanweisung empfängt, umfasst:
Schließen des ersten Schaltersatzes;
Schließen des zweiten Schaltersatzes oder/und des DC-Schalters; und
Starten der Leistungselektronikwandlereinheit, um einen Netzverbindungszustand aufzurufen.

10. Verfahren zum Steuern des von einer Energiespeichereinheit getrennten Wandlers nach Anspruch 9, wobei, wenn das Steuermodul einen Fehler der Leistungselektronikwandlereinheit erfasst, das Steuerverfahren umfasst:
Anhalten der Leistungselektronikwandlereinheit;
Öffnen des ersten Schaltersatzes;
Beurteilen, ob der Fehler beseitigt wurde;
wenn nicht, Öffnen des zweiten Schaltersatzes; und
wenn ja, Beibehalten des geschlossenen Zustands des ersten Schaltersatzes, um die getrennte Energiespeichereinheit in Betrieb zu nehmen; oder
wobei, wenn die Stromerfassungseinheit erfasst, dass ein Strom einen Stromgrenzwert überschreitet, das Steuerverfahren umfasst:
Öffnen des DC-Schalters und Inbetriebnehmen des Strombegrenzungswiderstands, sodass der Stromgrenzwert einen maximalen unterbrechbaren Stromwert des DC-Schalters nicht überschreitet;
Öffnen des zweiten Schaltersatzes; und
Öffnen des ersten Schaltersatzes, um einen Offline-Zustand aufzurufen.

11. Verfahren zum Steuern des Systems zur verteilten Energiespeicherung nach Anspruch 5, wobei, wenn der von einer Energiespeichereinheit getrennte Wandler unabhängig von anderen von einer Energiespeichereinheit getrennten Wandlern arbeitet, das Steuerverfahren umfasst:
Öffnen aller zweiten Schaltersätze;
Schließen aller ersten Schaltersätze; und
Starten aller Leistungselektronikwandlereinheiten; oder
wenn die von einer Energiespeichereinheit getrennten Wandler die getrennten Energiespeichereinheiten gemeinsam nutzen, das Steuerverfahren umfasst:
Schließen aller ersten Schaltersätze;
Öffnen aller DC-Schalter;
Schließen aller zweiten Schaltersätze;
Schließen aller DC-Schalter nach dem Ausgleichen der DC-Spannungen der von einer Energiespeichereinheit getrennten Wandler; und
Starten aller Leistungselektronikwandlereinheiten.

12. Verfahren zum Steuern des Systems zur verteilten Energiespeicherung nach Anspruch 11, wobei nach dem Öffnen aller zweiten Schaltersätze; das Verfahren ferner umfasst:
Öffnen aller DC-Schalter; oder
wobei, falls die Leistungselektronikwandlereinheit von einem der von einer Energiespeichereinheit getrennten Wandler ausfällt, das Steuerverfahren ferner umfasst:
Öffnen des DC-Schalters in dem von einer Energiespeichereinheit getrennten Wandler, wenn ein Maßnahmenschwellenwert des Überschreitens eines Stromgrenzwerts erfasst wird;
Bestimmen des fehlerhaften von einer Energiespeichereinheit getrennten Wandlers;
Öffnen des zweiten Schaltersatzes und des ersten Schaltersatzes des fehlerhaften von einer Energiespeichereinheit getrennten Wandlers;
Schließen der DC-Schalter in den anderen von einer Energiespeichereinheit getrennten Wandlern nach dem Ausgleichen der DC-Spannungen der anderen von einer Energiespeichereinheit getrennten Wandler;
Schließen des zweiten Schaltersatzes des fehlerhaften von einer Energiespeichereinheit getrennten Wandlers; und
Schließen des DC-Schalters des fehlerhaften von einer Energiespeichereinheit getrennten Wandlers, sobald eine Spannung der getrennten Energiespeichereinheit des fehlerhfaten von einer Energiespeichereinheit getrennten Wandlers innerhalb eines vorgegebenen Bereichs liegt.

13. Verfahren zum Steuern des Systems zur verteilten koordinierten Steuerung für Energiespeichereinheiten nach Anspruch 8, umfassend:
an den einzelnen M Steuereinrichtungen zur verteilten Energiespeicherung Empfangen einer Anweisung von der Hauptsteuereinrichtung, wobei die Hauptsteuereinrichtung die Anweisung nach dem startenden Steuern eines Hauptwandlers und Erfassen, dass eine DC-Verteilerschienenspannung stabil ist, sendet; und
öffnendes oder schließendes Steuern aller ersten Schaltersätze und aller zweiten Schaltersätze und startendes oder anhaltendes Steuern aller Leistungselektronikwandlereinheiten auf Grundlage der Anweisung.

14. Verfahren zum Steuern des Systems zur verteilten koordinierten Steuerung für Energiespeichereinheiten nach Anspruch 13, wobei, wenn die Anweisung eine Startanweisung ist, der Schritt des öffnenden oder schließenden Steuerns aller ersten Schaltersätze und aller zweiten Schaltersätze und des startenden oder anhaltenden Steuerns aller Leistungselektronikwandlereinheiten auf Grundlage der Anweisung umfasst:
schließendes Steuern aller ersten Schaltersätze;
schließendes Steuern aller zweiten Schaltersätze;
Starten aller Leistungselektronikwandlereinheiten nach dem Überprüfen, dass die Stellungen aller Schaltersätze korrekt sind; und
Rückmelden eines erfolgreichen Startbefehls an die Hauptsteuereinrichtung; oder
wenn die Anweisung eine Energieeinspeicherungsanweisung ist, der Schritt des öffnenden oder schließenden Steuerns aller ersten Schaltersätze und aller zweiten Schaltersätze und des startenden oder anhaltenden Steuerns aller Leistungselektronikwandlereinheiten auf Grundlage der Anweisung umfasst:
Öffnendes Steuern aller ersten Schaltersätze;
schließendes Steuern aller zweiten Schaltersätze; und
Rückmelden eines erfolgreichen Einspeicherbefehls an die Hauptsteuereinrichtung nach dem Überprüfen, dass Stellungen aller ersten und zweiten Schaltersätze korrekt sind.

15. Verfahren zum Steuern des Systems zur verteilten koordinierten Steuerung für Energiespeichereinheiten nach Anspruch 14, wobei, wenn eine Leistungselektronikwandlereinheit vorübergehend ausfällt, das Steuerverfahren ferner umfasst:
Sperren der Leistungselektronikwandlereinheit durch die in Kommunikationsverbindung stehende Steuereinrichtung zur verteilten Energiespeicherung; und
Neustarten der Leistungselektronikwandlereinheit nach dem Verschwinden des Fehlers; oder wobei, wenn eine Leistungselektronikwandlereinheit einen dauerhaften Fehler aufweist, das Steuerverfahren umfasst:
Sperren der fehlerhaften Leistungselektronikwandlereinheit durch die in Kommunikationsverbindung stehende Steuereinrichtung zur verteilten Energiespeicherung; und Öffnen des ersten Schaltersatzes.

## Revendications

1. Un convertisseur séparé de l'unité de stockage d'énergie, comprenant :
une unité de conversion électronique de puissance, et
au moins une unité de stockage d'énergie séparée et un premier ensemble de commutateurs, dans lequel le premier ensemble de commutateurs est en connexion en série entre l'unité de stockage d'énergie séparée et un côté CC de l'unité de conversion électronique de puissance, et la au moins une unité de stockage d'énergie séparée ainsi que l'unité de conversion électronique de puissance sont configurées pour être séparables l'une du autre en séparant un commutateur à électrodes positives et un commutateur à électrodes négatives dans le premier ensemble de commutateurs ;
**caractérisé en ce que**
le convertisseur séparé de l'unité de stockage d'énergie comprend en outre :
un commutateur CC et une résistance de limitation de courant connectés en parallèle, dans lequel une combinaison du commutateur CC et de la résistance de limitation de courant est connectée en série entre la au moins une unité de stockage d'énergie séparée et un réseau électrique CC ; et
un deuxième ensemble de commutateurs relié en série entre la au moins une unité de stockage d'énergie séparée
et le réseau électrique CC ou un bus de stockage d'énergie, dans lequel la au moins une unité de stockage d'énergie séparée
et le bus de stockage d'énergie est configuré pour être séparable en séparant un commutateur à électrodes positives et un commutateur à électrodes négatives dans le deuxième ensemble de commutateurs.

2. Le convertisseur séparé de l'unité de stockage d'énergie selon la revendication 1, dans lequel l'unité de conversion électronique de puissance comprend :
un convertisseur CC-CC ayant une extrémité connectée au premier ensemble de commutateurs et une autre extrémité connectée à une charge CC ou une alimentation CC ; ou
un convertisseur CA-CC ou un convertisseur CC-CA, dans lequel une extrémité CC du convertisseur CA-CC est connectée au premier ensemble de commutateurs, une extrémité CA du convertisseur CA-CC est connectée à une charge CA ou une alimentation CA, une extrémité CC du convertisseur CC-CA est connectée au premier ensemble de commutateurs, et une extrémité CA du convertisseur CC-CA est configurée pour être utilisée comme extrémité de sortie CA.

3. Le convertisseur séparé de l'unité de stockage d'énergie selon la revendication 1, dans lequel le convertisseur comprend en outre :
une unité de détection de courant configurée pour détecter un courant circulant entre au moins une unité de stockage d'énergie séparée et le réseau électrique CC ; ou
un inducteur de limitation du courant connecté en série entre au moins une unité de stockage d'énergie séparée et le réseau électrique CC ;
dans lequel le commutateur CC se compose de deux dispositifs de commutation semiconducteurs de puissance munis de diodes antiparallèles et connectés en série inverse.

4. Le convertisseur séparé de l'unité de stockage d'énergie selon l'une des revendications 1 à 3, dans lequel le convertisseur séparé de l'unité de stockage d'énergie comprend en outre :
un contrôleur de stockage d'énergie distribué configuré pour contrôler une ou plusieurs unités de conversion électronique de puissance, le premier ensemble de commutateurs, le deuxième ensemble de commutateurs et le commutateur CC ;
le contrôleur de stockage d'énergie distribué comprend :
un module de communication pour recevoir une instruction externe ; et
un module de commande configuré pour contrôler l'unité de conversion électronique de puissance et le premier ensemble de commutateurs selon l'instruction externe, dans lequel :
le module de commande est également configuré pour contrôler
le deuxième ensemble de commutateurs et/ou le commutateur CC ;
le contrôleur de stockage d'énergie distribué est placé près de l'unité de stockage d'énergie séparée, et configuré pour contrôler l'unité de stockage d'énergie séparée dans la condition où l'unité de conversion électronique de puissance cesse de fonctionner.

5. Un système de stockage d'énergie distribué, comprenant :
un bus de stockage d'énergie et N convertisseurs séparés de l'unité de stockage d'énergie selon l'une des revendications 1 à 3, dans lequel N ≥ 2 et les convertisseurs séparés de l'unité de stockage d'énergie sont connectés en parallèle au bus de stockage d'énergie ; et N contrôleurs de stockage d'énergie distribué selon la revendication 4, chacun étant configuré pour contrôler le convertisseur séparé de l'unité de stockage d'énergie respective un à un ; et
un contrôleur maître configuré pour communiquer avec les N contrôleurs de stockage d'énergie distribué.

6. Un système de commande coordonné distribué pour des unités de stockage d'énergie, comprenant :
N convertisseurs séparés d'unités de stockage d'énergie selon l'une des revendications 1 à 3 dans lequel N ≥ 2 ;
M contrôleurs de stockage d'énergie de type distribué selon la revendication 4, dans lequel M ≥ 2 ; et
un contrôleur principal configuré pour communiquer avec les contrôleurs de stockage d'énergie de type distribué ;
des convertisseurs K sans stockage d'énergie, chacun comprenant une unité de conversion électronique de puissance, dans lequel K ≥ 1 ;
dans lequel un certain nombre des contrôleurs de stockage d'énergie distribués de type M sont conformes à M ≤ (N + K).

7. Le système de commande coordonné distribué pour des unités de stockage d'énergie selon la revendication 6, dans lequel la communication une-à-une ou une à plusieurs est configurée pour être réalisée entre les contrôleurs de stockage d'énergie de type distribué et les convertisseurs séparés de l'unité de stockage d'énergie ou les convertisseurs K sans stockage d'énergie ; ou
chacun des contrôleurs de stockage d'énergie de type distribué M est configuré pour contrôler l'ouverture et la fermeture du premier ensemble de commutateurs et du deuxième ensemble de commutateurs dans l'unité de stockage d'énergie séparé par une connexion de communication établie avec le contrôleur de stockage d'énergie de type distribué ; ou
le contrôleur de stockage d'énergie distribué est configuré pour recevoir les valeurs de puissance active et réactive envoyées par le contrôleur principal pour contrôler l'unité de conversion électronique de puissance.

8. Le système de commande coordonné distribué pour des unités de stockage d'énergie selon la revendication 6, comprenant en outre :
un convertisseur principal qui est un convertisseur CA-CC avec un côté CA connecté à une alimentation CA et un côté CC connecté à un réseau électrique CC.

9. Un procédé de commande de convertisseur séparé d'unité de stockage d'énergie selon la revendication 4, comprenant :
arrêter l'unité de conversion électronique de puissance et ouvrir le premier ensemble de commutateurs lorsque l'unité de conversion électronique de puissance doit être séparée de l'unité de stockage d'énergie séparée ; ou
fermer le deuxième ensemble de commutateurs ou/ou le commutateur CC pour entrer dans un état d'entrée de stockage d'énergie, lorsque le module de commande reçoit une instruction d'entrée d'unité de stockage d'énergie ; ou
dans le cas dans lequel le module de commande reçoit une instruction de connexion à la grille, le procédé de commande comprend :
fermer le premier ensemble de commutateurs ;
fermer le deuxième ensemble de commutateurs ou/ou le commutateur CC ; et
démarrant l'unité de conversion électronique de puissance pour entrer en état de connexion au réseau.

10. Procédé de commande du convertisseur séparé d'unité de stockage d'énergie selon la revendication 9, dans laquelle lorsque le module de commande détecte une défaillance de l'unité de conversion électronique de puissance, le procédé de commande comprend :
arrêter l'unité de conversion électronique de puissance ;
ouvrir le premier ensemble de commutateurs ;
juger si la défaillance est éliminée ou non ;
si non, ouvrir le deuxième ensemble de commutateurs ; et
si oui, maintenir un état fermé du premier commutateur configuré pour permettre la mise en service de l'unité de stockage d'énergie séparée ; ou
lorsque l'unité de détection de courant détecte qu'un courant dépasse une valeur limite de courant, le procédé de commande comprend :
ouvrir le commutateur CC et mettre en marche la résistance de limitation de courant, afin que la limite de courant ne dépasse pas une valeur maximale de courant de rupture du commutateur CC ;
ouvrir le deuxième ensemble de commutateurs ; et
ouvrir le premier ensemble de commutateurs pour passer en mode hors ligne.

11. Un procédé de commande du système de stockage d'énergie distribué selon la revendication 5, dans lequel lorsque le convertisseur séparé de l'unité de stockage d'énergie fonctionne indépendamment des autres convertisseurs séparés de l'unité de stockage d'énergie, le procédé de commande comprend :
ouvrir tous les deuxièmes ensembles de commutateurs ;
fermer tous les premiers ensembles de commutateurs ; et
démarrer toutes les unités de conversion électronique de puissance ; ou
lorsque les convertisseurs séparés des unités de stockage d'énergie partagent les unités de stockage séparées, le procédé de commande comprend :
fermer tous les premiers ensembles de commutateurs ;
ouvrir tous les commutateurs CC ;
fermer tous les deuxièmes ensembles de commutateurs ;
fermer tous les commutateurs CC quand les tensions CC des convertisseurs séparés de l'unité de stockage d'énergie sont équilibrées ; et
démarrer toutes les unités de conversion électronique de puissance.

12. Procédé de commande du système de stockage d'énergie distribué selon la revendication 11, dans lequel, après avoir ouvert tous les deuxièmes ensembles de commutateurs, le procédé comprend en outre :
ouvrir tous les commutateurs CC ; ou
quand l'unité de conversion électronique de puissance de l'un des convertisseurs séparés de l'unité de stockage d'énergie tombe en panne, le procédé de commande comprend en outre :
ouvrir le commutateur CC dans le convertisseur séparé d'unité de stockage d'énergie lorsqu'un courant dépassant un seuil d'action limite de courant est détecté ;
déterminer le convertisseur séparé de l'unité de stockage d'énergie défectueuse ;
ouvrir le deuxième ensemble de commutateurs et le premier ensemble du convertisseur séparé d'unité de stockage d'énergie défectueuse ;
fermer les commutateurs CC dans d'autres convertisseurs séparés des unités de stockage d'énergie quand les tensions CC des autres convertisseurs séparés des unités de stockage d'énergie sont équilibrées ;
fermer le deuxième ensemble de commutateurs du convertisseur séparé de l'unité de stockage d'énergie défectueuse ; et
fermer le commutateur CC du convertisseur séparé de l'unité de stockage d'énergie défectueuse quand une tension de l'unité de stockage séparée du convertisseur séparé de l'unité de stockage d'énergie défectueuse est dans une plage prédéterminée.

13. Procédé de commande du système de commande coordonné distribué pour des unités de stockage d'énergie selon la revendication 8, comprenant :
recevoir, par chacun des M contrôleurs de stockage d'énergie distribué, une instruction du contrôleur principal, dans lequel le contrôleur principal envoie l'instruction après avoir contrôlé un convertisseur principal pour démarrer et détecter qu'une tension sur le bus CC est stable ; et
contrôler tous les premiers ensembles de commutateurs et tous les deuxièmes ensembles de commutateurs pour les ouvrir ou les fermer, ainsi que toutes les unités de conversion électronique de puissance pour les démarrer ou les arrêter, selon les instructions.

14. Procédé de commande du système de commande coordonné distribué pour des unités de stockage d'énergie selon la revendication 13, dans lequel, lorsque l'instruction est une instruction de démarrage, l'étape consiste à commander tous les premiers ensembles de commutateurs et tous les deuxièmes ensembles de commutateurs à se fermer ou à s'ouvrir et toutes les unités de conversion électronique de puissance à démarrer ou à s'arrêter selon l'instruction, comprenant :
contrôler tous les premiers ensembles de commutateurs pour les fermer ;
contrôler tous les deuxièmes ensembles de commutateurs pour les fermer ;
démarrer toutes les unités de conversion électronique de puissance après avoir confirmé que la position de tous les commutateurs est correcte ; et
renvoyer une commande de démarrage réussie au contrôleur principal ; ou
lorsque l'instruction est une instruction d'entrée d'unité de stockage d'énergie, l'étape consistant à contrôler tous les premiers ensembles de commutateurs et tous les deuxièmes ensembles de commutateurs à se fermer ou à s'ouvrir, ainsi que tous les unités de conversion électronique de puissance à démarrer ou s'arrêter selon l'instruction, comprenant :
contrôler tous les premiers commutateurs pour les ouvrir ;
contrôler tous les deuxièmes commutateurs pour les fermer ; et
renvoyer une commande d'entrée réussie au contrôleur principal après avoir confirmé que les positions de tous les premiers et deuxièmes ensembles de commutateurs sont correctes.

15. Procédé de commande du système de commande coordonné distribué pour des unités de stockage d'énergie selon la revendication 14, dans lequel quand une unité de conversion électronique de puissance est en défaillance temporaire, le procédé de commande comprend en outre :
verrouiller, par le contrôleur de stockage d'énergie distribué en connexion de communication, l'unité de conversion électronique de puissance ; et
redémarrer l'unité de conversion électronique de puissance après la disparition du défaut ; ou quand une unité de conversion électronique de puissance présente un défaut permanent, le procédé de commande comprend :
verrouiller, par le contrôleur de stockage d'énergie distribué en connexion de communication, l'unité électronique défectueuse ; et ouvrir le premier ensemble de commutateurs.
